# DEMANDE DE BREVET EUROPEEN

(11) **EP 0 781 011 A1**
(43) Date de publication de la demande: **25.06.1997**
(21) Numéro de dépôt: 96119882.7
(22) Date de dépôt: 11.12.1996
(51) Int. Cl.: H04L 27/08

(54) **Récepteur de signaux modulés en sauts d'amplitude, en particulier pour la télécommande de véhicules automobiles**

(30) Priorité: 18.12.1995 FR 9514962
(71) Demandeur: VALEO ELECTRONIQUE, 94042 Creteil Cédex (FR)
(72) Inventeur: Leclercq, Pascal, 94260 Fresnes (FR)
(74) Mandataire: Gamonal, Didier

(57) **Abrégé**

La présente invention concerne un circuit détecteur de remise en forme d'un signal numérique transmis par onde radiofréquence modulée en amplitude, comprenant un détecteur de crêtes (21), un filtre passe-bas (22) et un comparateur (23) en cascade, ainsi qu'une boucle de rétroaction (21,22,34,35) comprenant un circuit amplificateur d'erreur (34) de manière à présenter une boucle d'asservissement en amplitude, la tension présente en sortie du filtre passe-bas (22) étant la tension d'erreur de ladite boucle d'asservissement.

Avantage : un tel détecteur permet de remettre en forme correctement des signaux présentant une faible profondeur de modulation.

Application à un récepteur de télécommande pour véhicule automobile.

## Description

La présente invention concerne un circuit détecteur pour la remise en forme d'un signal numérique transmis par onde radiofréquence modulée en amplitude, ainsi qu'un récepteur et un système de télécommande l'incorporant, notamment pour véhicule automobile.

Elle trouve application dans tout système de transmission d'informations numériques par porteuse radiofréquence modulée en amplitude.

Elle s'applique avantageusement à un système de télécommande radiofréquence pour véhicule automobile, notamment pour l'ouverture à distance des portières.

Un détecteur de remise en forme est utilisé dans le récepteur d'un tel système pour récupérer les données numériques portées par un signal radiofréquence modulé en amplitude émis par un émetteur.

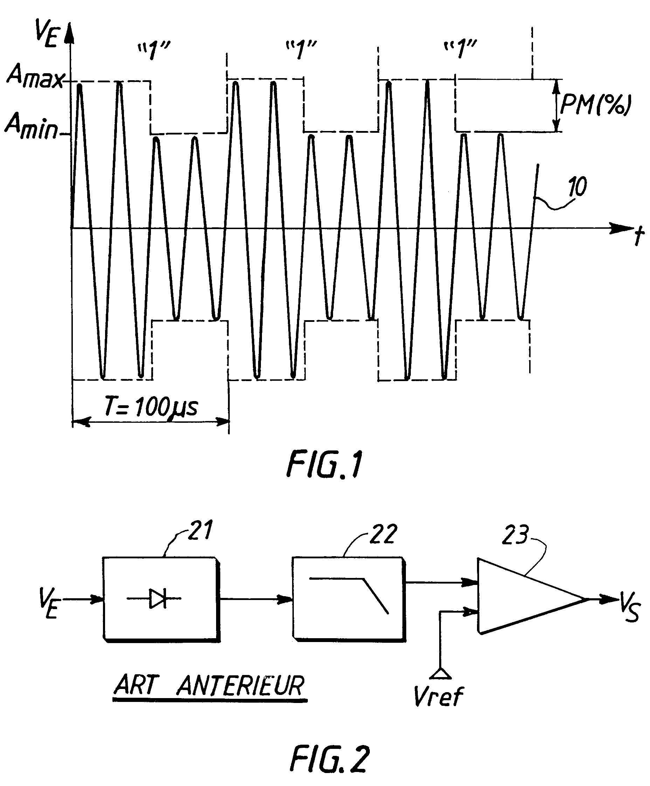

Un tel signal est visible à la figure 1 sur laquelle l'axe horizontal est l'axe des temps et l'axe vertical porte l'amplitude du signal VE reçu en entrée du récepteur radiofréquence, ce signal reçu étant représenté par la courbe 10.

Sur cette figure la courbe 10 se présente comme une sinusoïde à relativement haute fréquence, par exemple quelques centaines de kilohertzs (kHzs), modulée en amplitude par un signal à relativement basse fréquence par exemple 10 kHz, ce signal modulant étant le signal numérique à transmettre (train de bits). Ce signal numérique est codé suivant un codage des données par niveaux de tension, connu sous la dénomination anglo-saxonne de codage 〈〈Manchester〉〉.

A la figure 1 on a représenté le signal VE pour trois périodes T (T = 100 µs) du signal modulant, ces trois périodes correspondant à la transmission de trois valeurs binaires 〈〈1〉〉 consécutives.

Le signal VE reçu présente deux niveaux d'amplitude sensiblement constante, référencés Amax pour le niveau maximum et Amin pour le niveau minimum. La différence entre ces deux niveaux, référencée PM et exprimée en pourcentage de l'amplitude maximum, constitue la profondeur de modulation.

Du fait des perturbations sur le canal de transmission, la profondeur de modulation du signal reçu est fluctuante et peut atteindre une valeur très faible, ce qui rend la démodulation et la récupération des données numériques difficiles.

Les perturbations dont le signal émis par l'émetteur est susceptible d'être affecté sur le canal de transmission, peuvent notamment se ramener à un brouillage par modulation de fréquence et/ou à un brouillage en onde entretenue pure.

Classiquement, le signal reçu est porté en entrée d'un circuit détecteur de crêtes.

Les imperfections du canal de transmission se traduisent également par des fluctuations rapides de la composante continue du signal en sortie du détecteur de crêtes, ce qui nécessite une adaptation permanente de la chaîne de réception, et notamment du détecteur de remise en forme.

Les détecteurs de remise en forme connus dans l'état de la technique, qui font appel à des diodes simples, des transistors ou des circuits intégrés spécialisés, ne sont pas résistants vis-à-vis des perturbations du canal de transmission, notamment car ils ne bloquent pas, généralement, la composante continue du signal en sortie du détecteur de crètes.

D'autres détecteurs, également connus, comportent des moyens pour bloquer cette composante continue et permettre de récupérer des signaux ayant une faible profondeur de modulation. Ces moyens sont cependant généralement constitués par des condensateurs de liaison de valeur importante qui ralentissent le temps d'établissement de la chaîne de réception.

En effet, ces condensateurs doivent être préalablement chargés ce qui, en pratique, ne permet pas de remettre en forme correctement les premiers bits reçus. De plus ces détecteurs ne réagissent que très lentement aux variations de la composante continue du signal en sortie du détecteur de crètes.

Ceci est particulièrement dommageable dans le cadre d'une application à un système de télécommande pour véhicule automobile dans lequel le récepteur présente des phases de sommeil et des phases de réveil périodiques, afin de limiter la consommation statique susceptible de décharger la batterie, et où cependant un signal reçu pendant une phase de réveil doit être traité rapidement, par exemple pour déclencher l'ouverture des portières de façon transparente pour l'utilisateur.

Afin de pallier ces inconvénients de l'état de la technique la présente invention propose un circuit détecteur pour la remise en forme d'un signal numérique transmis par onde radiofréquence modulée en amplitude, comprenant en série un détecteur de crêtes, un filtre passe-bas et un comparateur dont la sortie délivre le signal numérique remis en forme, caractérisé en ce qu'il comporte une boucle de rétroaction comprenant un amplificateur d'erreur dont une première entrée est connectée à la sortie du filtre passe-bas, dont une seconde entrée est connectée à une source de tension de référence, et dont la sortie est connectée à une première entrée d'un multiplieur analogique, la sortie du multiplieur analogique étant connectée en entrée du détecteur de crêtes, et le signal à démoduler étant porté sur une seconde entrée dudit multiplieur analogique.

Selon une caractéristique de l'invention, l'amplificateur d'erreur est un circuit intégrateur.

Selon une caractéristique de l'invention, la source de tension de référence est une pile produisant une tension de valeur constante.

Selon une autre caractéristique, le filtre passe-bas comporte une entrée de réglage de sa fréquence de coupure, de manière à présenter une fréquence de coupure ajustable en fonction de la fréquence du signal modulant.

Selon une autre caractéristique de l'invention, le comparateur comporte une première entrée connectée en sortie du filtre passe-bas et une seconde entrée connectée à ladite source de tension de référence.

L'invention concerne aussi un récepteur radiofréquence, notamment pour installation de télécommande pour véhicule automobile, caractérisé en ce qu'il comporte un circuit détecteur tel que ci-dessus.

Selon une caractéristique de l'invention, le récepteur comporte un noeud en amont du circuit détecteur de remise en forme qui est connecté à la sortie du circuit amplificateur d'erreur de manière à constituer une boucle d'asservissement en amplitude qui réalise un contrôle automatique de gain.

L'invention concerne également un système de télécommande radiofréquence pour véhicule automobile, notamment pour l'ouverture à distances des portières, caractérisé en ce qu'il comporte un tel récepteur.

D'autres caractéristiques et avantages de la présente invention apparaîtront à la lecture de la description purement illustrative qui va suivre, en référence aux dessins annexés qui sont :
- à la figure 1 déjà analysée : une courbe représentant un signal sinusoïdal modulé en amplitude reçu en entrée d'un récepteur radiofréquence ;
- à la figure 2 : un schéma d'un détecteur de remise en forme selon l'art antérieur ;
- à la figure 3 : un schéma d'un détecteur de remise en forme selon l'invention.

A la figure 2 on a représenté schématiquement un circuit détecteur de remise en forme d'un signal VE modulé en amplitude, reçu en entrée d'un récepteur radiofréquence.

Le signal reçu VE est porté sur une entrée d'un détecteur de crêtes 21 dont la sortie est connectée à l'entrée d'un filtre passe-bas 22.

La sortie du filtre passe-bas 22 est connectée à une première entrée d'un comparateur 23 dont la seconde entrée est connectée à une source de tension de référence Vréf.

Le détecteur de crêtes 21, le filtre passe-bas 22 et le comparateur 23 sont donc montés en série (on dit aussi en cascade), et le signal VS présent en sortie du comparateur est le signal numérique récupéré, qui contient les informations binaires transmises.

Le détecteur de crêtes est classiquement un circuit comprenant au moins une diode et un condensateur. Les constantes de temps du détecteur de crêtes sont choisies de manière à ce que le temps d'attaque soit suffisamment court pour permettre de suivre des évolutions rapides du niveau moyen du signal d'entrée VE, et à ce que le temps de descente soit assez long pour que la modulation soit reproduite correctement.

La fréquence de coupure Fc du filtre passe-bas est déterminée en fonction du débit numérique des données transmises, c'est à dire de la fréquence du signal modulant. Plus ce débit est important et plus la fréquence de coupure Fc est grande.

Pour permettre une détection correcte malgré les fluctuations possibles de la composante continue en sortie du détecteur de crêtes 21, il est nécessaire de faire varier le niveau de la tension de référence Vréf en l'asservissant sur une grandeur telle que la puissance moyenne du signal reçu, ce qui nécessite un circuit compliqué pour réaliser le détecteur. De plus, un tel détecteur ne permet pas de récupérer des signaux modulés présentant une faible profondeur de modulation PM, ni des signaux présentant des variations brutales de cette grandeur PM.

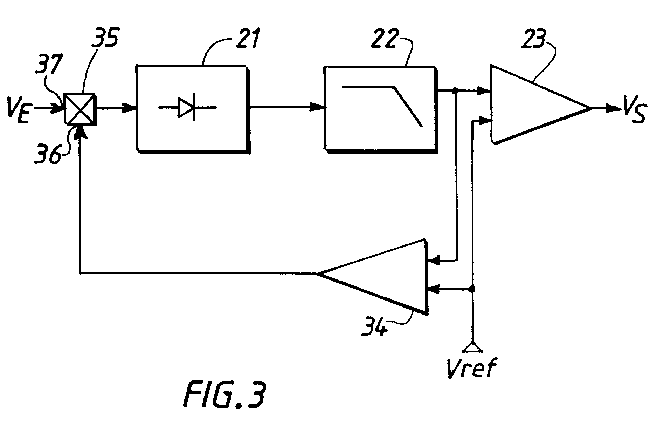

A la figure 3, sur laquelle les mêmes éléments qu'à la figure 2 portent les mêmes références, on a représenté un circuit détecteur de remise en forme conforme à l'invention.

Ce détecteur comporte toujours un détecteur de crêtes 21, un filtre passe-bas 22 et un comparateur 23 en cascade. Il comporte également une boucle de rétroaction comprenant un circuit amplificateur d'erreur 34 à deux entrées.

Selon un mode de réalisation préféré de l'invention, les constantes de temps du détecteur de crêtes sont optimisées et sont très proches à la montée et à la descente, de manière à ne pas générer de distorsion susceptible de dégrader le signal numérique récupéré (erreurs de transmission).

Une première entrée du circuit amplificateur d'erreur 34 est connectée en sortie du filtre passe-bas 22, et une seconde entrée dudit circuit est connectée à une source de tension de référence Vréf.

Préférentiellement, la seconde entrée du comparateur 23 est connectée à ladite source de tension de référence Vréf.

Selon un avantage de l'invention, cette tension de référence Vréf est constante. Ceci simplifie fortement la conception du détecteur par rapport aux détecteurs de l'état de la technique. La source de tension de référence est par exemple une pile.

La sortie du circuit amplificateur d'erreur est connectée sur une première entrée 36 d'un multiplieur analogique 35, dont la sortie est connectée à l'entrée du détecteur de crêtes 21. Le signal reçu VE est porté sur une seconde entrée 37 dudit multiplieur analogique 35.

De la sorte le détecteur de remise en forme selon l'invention comporte une boucle d'asservissement en amplitude, et la tension présente en sortie du filtre passe-bas 22 est la tension d'erreur de ladite boucle d'asservissement.

Le fonctionnement d'un tel détecteur est le suivant :
- lorsqu'un signal non modulé en amplitude est présent sur l'entrée 37 du multiplieur analogique 35 la boucle d'asservissement se verrouille en sorte que le niveau continu en sortie du filtre passe-bas 22 est ramené à la valeur de la tension de référence Vréf ; d'un point de vue pratique une porteuse non modulée en amplitude peut correspondre à la présence d'un brouilleur fonctionnant en modulation de fréquence (ou une modulation apparentée) ou en modulation en onde entretenue pure ;
- dès qu'un signal utile modulé en amplitude est superposé à cette porteuse, les variations du niveau de la tension en sortie du filtre passe-bas 22, qui constitue le signal d'erreur de la boucle d'asservissement, déclenchent le comparateur 23 en sorte que le signal VS présent en sortie dudit comparateur reproduit le signal modulant ; ce signal VS constitue le signal numérique récupéré comprenant les données binaires transmises.

Selon un mode préféré de réalisation, le circuit amplificateur d'erreur 34 est un circuit intégrateur dont la tension de seuil et les constantes de temps sont choisies de manière à optimiser l'amplitude du signal détecté tout en maintenant la stabilité de la boucle d'asservissement.

Ce circuit intégrateur est par exemple réalisé autour d'un amplificateur opérationnel, de manière connue en soi.

Des essais pratiques, réalisés avec une porteuse à 455 kHz pour un débit numérique de 10 kbits/s, c'est-à-dire un signal modulant de fréquence égale à 10 kHz, et avec un codage de type 〈〈 Manchester 〉〉, ont montré une amélioratiion de la sensibilité de l'ordre de 3 à 4 décibels (db) en puissance, par rapport à la sensibilité d'un détecteur conventionnel. Ces résultats expérimentaux ont également montré qu'il était possible de récupérer correctement des signaux ayant une très faible profondeur de modulation PM, jusqu'à des valeurs de l'ordre de 5 %.

De plus, le détecteur est capable de se stabiliser avec seulement un ou deux bits de préambule, en partant d'une absence totale de signal en entrée du récepteur.

Selon un aspect de l'invention, le filtre passe-bas 22 comporte une entrée de réglage de sa fréquence de coupure en sorte qu'il est possible d'ajuster cette fréquence de coupure à différentes valeurs Fc1, Fc2, Fc3, ..., en fonction d'un paramètre relatif au débit numérique de la transmission, c'est à dire aussi, en fonction de la fréquence du signal modulant.

Ainsi, le détecteur selon l'invention peut être utilisé dans des récepteurs radiofréquence pouvant fonctionner avec des débits numériques de différentes valeurs.

L'invention concerne également un récepteur radiofréquence, notamment pour installation de télécommande pour véhicules automobile comportant un tel détecteur.

Selon un avantage de l'invention le signal en sortie de l'amplificateur d'erreur 34 du détecteur de remise en forme est utilisé pour réaliser un contrôle automatique de gain (CAG) du récepteur. En effet un noeud du circuit du récepteur, en amont du détecteur dans la chaîne de réception et de détection, est connecté à la sortie du circuit amplificateur d'erreur de manière à constituer une boucle d'asservissement en amplitude qui réalise un contrôle automatique de gain.

## Revendications

1. Circuit détecteur pour la remise en forme d'un signal numérique transmis par onde radiofréquence modulée en amplitude, comprenant en série un détecteur de crêtes (21), un filtre passe-bas (22) et un comparateur (23) dont la sortie délivre le signal numérique (VS) remis en forme, caractérisé en ce qu'il comporte une boucle de rétroaction (21,22,34,35) comprenant un amplificateur d'erreur (34) dont une première entrée est connectée à la sortie du filtre passe-bas (22), dont une seconde entrée est connectée à une source de tension de référence (Vréf), et dont la sortie est connectée à une première entrée (36) d'un multiplieur analogique (35), la sortie du multiplieur analogique étant connectée en entrée du détecteur de crêtes(21), et le signal à démoduler (VE) étant porté sur une seconde entrée (37) dudit multiplieur analogique (35).

2. Circuit détecteur selon la revendication 1, caractérisé en ce que l'amplificateur d'erreur (34) est un circuit intégrateur.

3. Circuit détecteur selon la revendication 1, caractérisé en ce que la source de tension de référence (Vréf) est une pile produisant une tension de valeur constante.

4. Circuit détecteur selon la revendication 3, caractérisé en ce que le filtre passe-bas (22) comporte une entrée de réglage de sa fréquence de coupure, de manière à présenter une fréquence de coupure (Fc1,Fc2,Fc3,...) ajustable en fonction de la fréquence du signal modulant.

5. Circuit détecteur selon la revendication 1, caractérisé en ce que le comparateur (23) comporte une première entrée connectée en sortie du filtre passe-bas (22) et une seconde entrée connectée à ladite source de tension de référence (Vréf).

6. Récepteur radiofréquence, notamment pour installation de télécommande pour véhicule automobile, caractérisé en ce qu'il comporte un circuit détecteur selon l'une des revendications précédentes.

7. Récepteur selon la revendication 6, caractérisé en ce qu'il comporte un noeud, en amont du circuit détecteur de remise en forme, qui est connecté à la sortie du circuit amplificateur d'erreur de manière à constituer une boucle d'asservissement en amplitude qui réalise un contrôle automatique de gain.

8. Système de télécommande radiofréquence pour véhicule automobile, notamment pour l'ouverture à distances des portières, caractérisé en ce qu'il comporte un récepteur selon la revendication 6 ou la revendication 7.
